## Europäisches Patentamt
## European Patent Office
## Office européen des brevets

(19)

(11) Numéro de publication: **0 165 175**

**A2**

(12)
# DEMANDE DE BREVET EUROPEEN

(21) Numéro de dépôt: **85401129.3**

(22) Date de dépôt: **07.06.85**

(51) Int. Cl.⁴: **F 24 F 11/04**
**F 24 F 13/10, G 05 D 22/02**
**F 24 F 7/00**

(30) Priorité: **12.06.84 FR 8409113**
**30.01.85 FR 8501315**

(43) Date de publication de la demande:
**18.12.85 Bulletin 85/51**

(84) Etats contractants désignés:
**BE DE GB IT NL SE**

(71) Demandeur: **LA VENTILATION INDUSTRIELLE ET MINIERE**
**Rue du Clos Reine**
**F-78410 Aubergenville(FR)**

(72) Inventeur: **Roussel, Michel**
**14 Avenue de Cressac Elancourt**
**F-78310 Maurepas(FR)**

(74) Mandataire: **Portal, Gérard et al,**
**Cabinet Z. Weinstein 20, Avenue de Friedland**
**F-75008 Paris(FR)**

(54) **Bouche et installation de ventilation réglable en fonction de la température et du taux d'humidité du flux d'air.**

(57) La présente invention concerne une installation à au moins une bouche (5) de ventilation comportant un obturateur (9) réglable asservi à la température et au taux d'humidité de l'air qui la traverse, l'obturateur étant constitué par un bilame (9) fixé à la paroi d'un tube (7) de montage de ladite bouche (9) dans un conduit de ventilation (1, 3) de manière à exposer la surface externe de sa courbure au flux F d'air, caractérisée en ce que ledit bilame (9) est équipé d'un moyen d'apport de calories additionnel (11) commandé par un détecteur (14) du taux d'humidité de l'air.

./...

Croydon Printing Company Ltd.

FIG.1

Bouche et installation de ventilation réglable en fonction de la température et du taux d'humidité du flux d'air.

La présente invention concerne un dispositif de contrôle du débit d'air extrait d'un local ou admis dans celui-ci en fonction de la température et du degré hygrométrique de cet air.

Il est connu de contrôler la ventilation forcée d'un local, par exemple d'habitation, en fonction des conditions d'utilisation de ce local qui sont variables au cours de l'année et de la journée. Pour ce faire, on dispose dans chaque (ou certains) orifices d'entrée ou de sortie d'air un obturateur dont la position détermine le débit d'air admis ou extrait. Le réglage de cette position est, pour chaque bouche, assuré soit manuellement par l'usager, soit automatiquement au moyen d'un dispositif d'asservissement qui est sensible à un paramètre significatif de ces conditions d'utilisation.

C'est ainsi que dans certaines bouches connues il est prévu de prendre en compte le degré hygrométrique de l'air de la pièce à ventiler, qui est significatif de l'occupation de cette pièce. Cette disposition trouve une application intéressante pour des pièces de séjour, et des chambres en ce qui concerne l'entrée d'air et des cuisines, salles de bain et W.C. pour ce qui concerne l'extraction.

Dans d'autres systèmes, le paramètre pris en considération est la température du gaz extrait. La seule application de ces dispositifs est réalisée pour des conduits d'extraction de gaz assurant simultanément la ventilation du local et l'évacuation des gaz brûlés d'un générateur à gaz. Ainsi le fonctionnement du générateur engendre la production de gaz chauds en direction de la bouche de ventilation qui réagit en déplaçant l'obturateur dans sa position d'ouverture maximale pour laisser un grand débit de gaz la traverser. Lorsque le générateur cesse de fonctionner, la température des gaz traversant la bouche diminue et l'obturateur reprend une position de plus faible ouverture de la bouche limitant le débit de passage aux seuls besoins de la ventilation du local.

Il existe également des dispositifs dans lesquels on prend en compte, par deux organes indépendants, le degré hygrométrique et la température pour commander l'ouverture de la bouche. Ce sont des bouches d'extraction pour ventiler une cuisine et évacuer les gaz d'un générateur. Leur installation dans une cuisine n'est pas satisfaisante car c'est le taux d'humidité relative qui est pris en compte. Or dans une cuisine la température croît en même temps que l'humidité si bien que l'humidité relative croît beaucoup plus lentement que l'élévation d'humidité absolue et le degré d'ouverture de la bouche s'avère insuffisant pour la ventilation correcte du local lorsque le générateur ne fonctionne pas, c'est-à-dire lorsque l'organe sensible à la température n'est pas mis en action. Il est alors nécessaire de maintenir la bouche de ventilation ouverte au moyen d'une commande manuelle qui la plupart du temps est négligée par l'utilisateur peu sensibilisé par ce problème.

D'une manière générale dans les systèmes asservis à la température, il est également utile de prévoir une commande manuelle d'ouverture de la bouche pour qu'une ventilation correcte du local puisse avoir lieu quand simplement les gaz et vapeurs de cuisine sont produits. En effet, ces gaz ne sont pas à une température suffisante pour déclencher par eux-mêmes l'ouverture du registre obturateur. En outre,l'ouverture ou la fermeture des bouches d'entrées d'air est restée jusqu'à ce jour indépendante de celle des bouches d'extraction, ce qui ne peut satisfaire de manière rationnelle la condition d'égalité de la somme des débits d'air entrant et de celle des débits d'air sortant. Les bouches existantes conduisent donc à des prises ou des évacuations d'air parasites incontrôlées.

La présente invention a pour but de pallier les inconvénients de ces dispositifs existants en proposant une bouche de ventilation tant pour l'extraction que l'admission d'air sensible au taux d'humidité absolu de l'air ou des gaz extraits ou admis, tout en étant capable d'être montée dans une variante de réalisation particulière sur un conduit d'extraction des gaz de combustion d'une chaudière.

A cet effet, l'invention a pour objet une bouche d'extraction ou d'admission d'air ou de gaz pour la ventilation d'un local, comportant un obturateur réglable constitué par un bilame sensible à la température et attelé à ladite bouche pour constituer un organe mobile de réglage de la section de passage des gaz à l'intérieur de la bouche et dont la position dans ladite section est telle qu'il comporte une face soumise au flux F d'air tendant à devenir de plus en plus convexe lors d'une élévation de température,caractérisée en ce que ledit bilame est équipé d'un moyen d'apport de calories additionnel commandé par un détecteur de taux d'humidité de l'air. Il convient de noter que le texte et les revendications mentionnent un détecteur d'humidité à titre d'exemple principal mais il faut étendre la portée de l'invention à tout détecteur de gaz polluant et notamment de gaz carbonique dont la présence est significative d'une occupation des locaux et implique la nécessité d'une ventilation.

Dans un mode de réalisation de l'invention, le moyen d'apport additionnel de calories est constitué par une résistance électrique fixée audit bilame connectée à une source de courant au moyen d'un circuit d'alimentation dans lequel le détecteur du taux d'humidité est un organe de commande de sa fermeture et de son ouverture.

Dans un mode préféré de réalisation, ladite résistance est intégrée dans une feuille mince collée audit bilame.

Il sera par ailleurs avantageux de prévoir l'installation du détecteur d'humidité séparément et à distance de celle de la bouche elle-même pour notamment réduire l'encrassage de celui-ci par les particules grasses ou non gazeuses véhiculées par l'air à extraire.

On pourra également concevoir ledit détecteur comme une platine sensible démontable par rapport à un support de fixation et de connexion électrique audit circuit d'alimentation du bilame.

Enfin, dans une variante avantageuse le circuit électrique d'alimentation de la résistance comportera un commutateur manuel disposé sur le circuit pour connecter audit circuit un organe de commande de l'ouverture de ce circuit, indépendant du détecteur d'humidité.

Un autre objet particulièrement intéressant de l'invention réside dans une installation de ventillation comportant au moins une bouche d'extraction et au moins une bouche d'admission conformes à l'invention, caractérisée en ce qu'elle comporte un capteur du courant traversant la résistance de chauffage de chaque bilame, connecté à un organe de commande de l'ouverture et de la fermeture du circuit d'alimentation de la résistance de chauffage de l'autre bilame, agissant sur ledit circuit indépendamment de l'état du détecteur d'humidité qui lui est associé.

Cet asservissement présente l'inconvénient que l'air neuf nécessaire à vaincre l'humidité créée dans la cuisine, ou dans une autre pièce technique telle que la salle de bains, transite par tout le logement et contribue à le refroidir.

D'autre part, l'inventeur a pu constater que l'asservissement ne s'avère pas indispensable entre l'ouverture d'une bouche d'entrée d'air et les bouches d'extraction. En effet, l'augmentation des débits qui résulte de l'ouverture d'une seule entrée d'air est réduite, et l'équilibre des débits s'obtient par une légère diminution de débit d'entrée dans les pièces inoccupées.

Par contre, si plusieurs entrées sont sollicitées par l'augmentation de l'humidité intérieure, le détecteur de la bouche placée en cuisine sera donc sollicité et provoquera l'ouverture nécessaire de cette bouche.

La présente invention a en outre pour but de résoudre le nouveau problème technique supplémentaire consistant en une simplification, et donc meilleure rationalisation, de la conception et du fonctionnement des bouches et installations de ventilation, notamment en éliminant l'asservissement précité prévu entre l'ouverture des bouches d'entrée et d'air neuf et celles d'extraction d'air vicié sans pour autant diminuer l'efficacité de sa ventilation.

Ce nouveau problème technique est aussi résolu pour la première fois par la présente invention.

Ainsi, la présente invention concerne encore une installation de ventilation comportant au moins une bouche d'admission et/ou d'extraction telle que ci-dessus définie, caractérisée en ce que ladite bouche d'admission lorsqu'elle est située dans une pièce technique, telle que cuisine, salle de bains, ne comporte pas de détecteur d'humidité tandis que l'obturateur réglable, de préférence un bilame, est commandé en parallèle avec celui de la bouche d'extraction. D'autre part, selon une caractéristique préférée, les bouches d'admission des pièces nobles sont autonomes et de type hygroréglables et ne sont pas asservies à l'ouverture d'une bouche d'extraction.

Selon une autre caractéristique de l'invention, l'ouverture de l'entrée d'air de la bouche d'admission est retardée, (ou est de débit plus faible), par rapport à celle de la bouche d'extraction de manière à maintenir une dépression dans ladite pièce, et donc dans ledit logement, de façon à éviter un court-circuitage de la ventilation minimale des pièces nobles ou principales.

D'autre part, la bouche d'extraction est réalisée de manière plus simple. Elle comporte un détecteur d'humidité et de préférence également une commande manuelle.

Par contre, selon cette modification, toutes les bouches d'admission ou d'extraction ne comportent pas de circuit électrique comportant un capteur du courant traversant la résistance de chauffage de chaque bilame.

On obtient ainsi une autonomie complète des bouches d'admission des pièces nobles qui ne sont plus astreintes à un asservissement lié à l'ouverture d'au moins une bouche d'extraction.

D'autre part, et par le retard de l'ouverture de l'entrée d'air de la bouche d'admission placée dans une pièce technique, on maintient une dépression dans le logement. Par exemple, la bouche d'admission n'est mise en route qu'à partir d'un certain seuil d'extraction pour la bouche d'extraction. A titre d'exemple, le débit de la bouche d'entrée peut être nul lorsque le débit de la bouche d'extraction est inférieur ou égal à 40 m$^3$/h et le débit de la bouche peut être de 95 cm$^3$/h lorsque le débit de la bouche d'extraction est de 135 m$^3$ par heure.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

- la figure 1 est un schéma d'une bouche d'extraction conforme à l'invention équipée de ses organes de commande,

- les figures 2A et 2B illustrent une bouche d'admission conforme à l'invention,

- la figure 3 est un schéma de principe d'une installation conforme à l'invention, et

- la figure 4 est une modification de la figure 1 représentant un montage en parallèle dans une pièce technique de la bouche d'extraction et de la bouche d'admission.

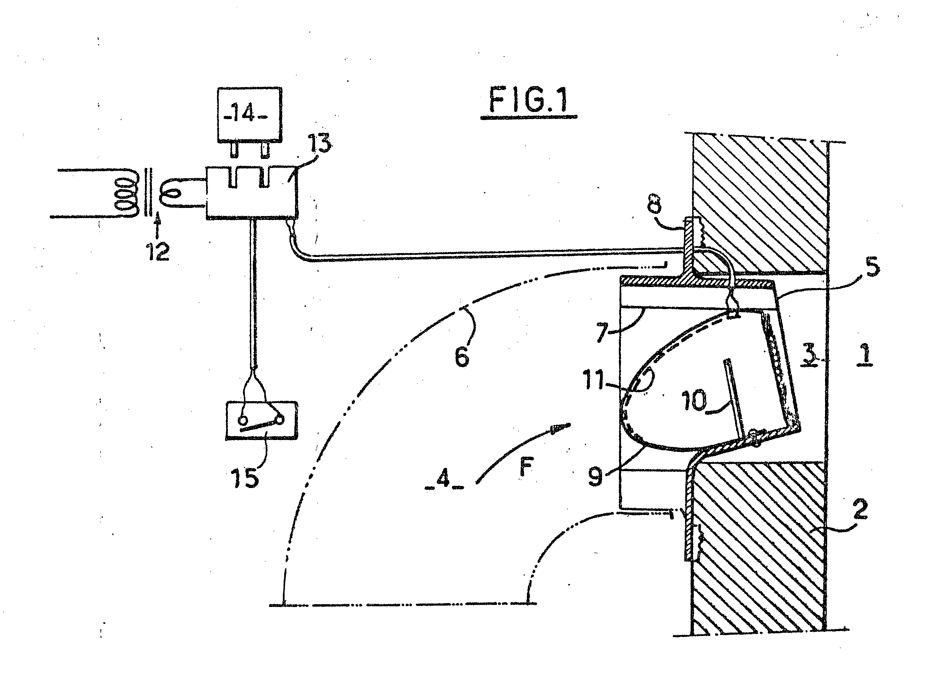

En se reportant tout d'abord à la figure 1 on voit un canal de ventilation 1, au travers des parois 2 duquel une prise 3 d'air est ménagée pour faire communiquer ce canal 1 avec l'air contenu dans un local 4, par exemple une cuisine. Cette prise d'air 3 est équipée d'une bouche de ventilation 5, qui sera décrite plus en détail ci-après, à laquelle un conduit 6 peut être raccordé. Ce conduit symbolise le moyen de collecte des gaz de combustion d'une chaudière de chauffage non représentée et/ou des gaz pollués dégagés par les appareils de cuisine, transitant par une hotte également non représentée. Ce conduit n'est pas nécessaire dans le cas où il n'existe ni hotte ni générateur à gaz.

La bouche 5 est essentiellement constituée par un tronçon de tube 7 de section rectangulaire, carrée ou autre forme appropriée pourvue d'une bride de fixation 8, à l'intérieur duquel est disposé un bilame 9 recourbé de manière à présenter sa face convexe au flux F de gaz. Ce bilame constitue un obturateur variable de la section de passage du tube 7 entre une position d'obturation maximale telle que celle représentée et définie par une butée réglable non représentée (par exemple une vis pénétrant à sa partie supérieure dans le tronçon du tube) et une position d'ouverture maximale dans laquelle le bilame 8 prend appui sur la butée 10. Ainsi selon que les gaz du flux F sont plus ou moins chauds, l'ouverture de la bouche sera plus ou moins grande du fait de la courbure plus ou moins prononcée du bilame léché par ces gaz.

La face concave du bilame 9 est en outre équipée d'une résistance 11 représentée ici sous la forme d'un film collé ou bilame. On peut imaginer sans sortir du cadre de l'invention que cette résistance affecte une autre forme par exemple celle d'un élément radiant placé dans la concavité du bilame. Cet élément de chauffage par effet Joule est connecté à une source d'alimentation en courant électrique (ici le secondaire d'un transformateur 12) au moyen d'un circuit électronique 13 qui assure essentiellement un rôle de modulateur de courant commandé par un détecteur d'humidité 14. Ce circuit sera constitué de préférence par un triac dont la gâchette est pilotée par le détecteur d'humidité. Le détecteur 14 peut être simplement constitué par un corps dont la résistance électrique varie en fonction du taux d'humidité. Alimenté par le secondaire du transformateur 12 il peut, au-delà d'un certain seuil de conductivité, délivrer la tension nécessaire au déblocage du triac susdit intégré dans le circuit 13.

On a représenté schématiquement sur cette figure le fait que le détecteur 14 est démontable par rapport à un support fixe qui peut comprendre le circuit 13. Cette disposition est avantageuse car elle permet, par simple débrochage de la platine sensible qui forme le détecteur, un remplacement aisé de cette dernière, qui peut à l'usage se recouvrir d'une couche grasse imperméable. On notera également que l'on peut disposer la platine et son support dans un endroit du local éloigné de la source d'émission des gaz viciés pour, notamment, en réduire l'encrassement et, éventuellement permettre de placer ce détecteur en un endroit du local éloigné de la source d'émission des gaz viciés pour, notamment, en réduire l'encrassement et, éventuellement permettre de placer ce détecteur en un endroit à température plus basse qu'au niveau de la bouche, donc

où l'humidité relative est plus élevée. Il peut toutefois être intéressant de placer ce détecteur dans le conduit d'extraction des produits de combustion d'une chaudière à condensation afin de moduler le débit extrait suivant l'arrêt ou le fonctionnement de la chaudière, solution très intéressante pour les logements ou appartements d'une ou deux pièces principales.

Enfin, le circuit d'alimentation de la résistance 11 comporte un commutateur manuel 15 qui peut par exemple connecter la gâchette du triac à une source de tension adéquate formant organe de commande secondaire permettant ainsi la commande de l'alimentation de la résistance 11 indépendamment du taux d'humidité existant et détecté et asservie éventuellement à une centrale de programmation du chauffage.

En fonctionnement le bilame 9 est sensible à la température du flux de gaz F. Ainsi, si ce gaz est constitué par les produits de combustion d'une chaudière, leur température élevée placera le bilame dans sa configuration d'ouverture permettant l'évacuation des débits de gaz nécessaires au bon fonctionnement de la chaudière. Après la séquence de fonctionnement de la chaudière l'ouverture sera réduite par le bilame 9 se refroidissant, limitant ainsi le débit de ventilation aux besoins normaux. Aux périodes d'utilisation des appareils de cuisine, les gaz collectés sont à une température inférieure à ceux de combustion et la position du bilame ne varie que légèrement par rapport à celle de débit minimum ce qui est souvent insuffisant pour ventiler correctement le local. C'est à ce moment que la platine hygrométrique 14 intervient car dans ces périodes le taux d'humidité croît. La résistance 11 est alors alimentée et échauffe le bilame 9 qui ouvre davantage la bouche.

Cette possibilité de commande électrique à distance présente un avantage considérable par rapport aux commandes mécaniques manuelles classiques, car le plus souvent ces commandes sont rendues inaccessibles à l'usager par la pose du mobilier de cuisine.

Un autre avantage de l'invention réside dans la possibilité d'utiliser la même tension de commande du triac du circuit 13 pour moduler, en maison individuelle, la vitesse du ventilateur d'extraction par l'intermédiaire d'un autre triac et d'ajuster ainsi cette vitesse aux stricts besoins correspondant au degré d'ouverture de la bouche.

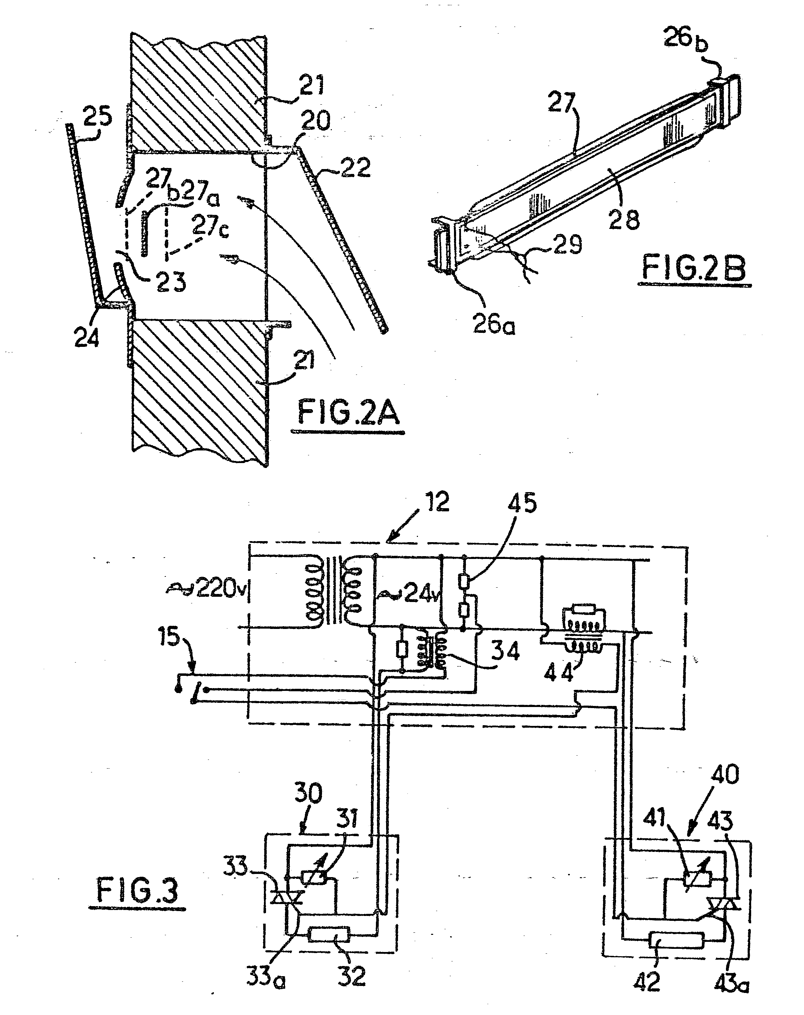

Sur les figures 2A et 2B on a représenté une bouche d'entrée d'air équipée d'une variante du dispositif selon l'invention. On voit sur la figure 2A une ouverture 20 d'admission d'air ménagée par exemple dans l'huisserie dormante 21 d'une fenêtre et pourvue d'une bouche d'entrée d'air comportant essentiellement un déflecteur extérieur 22, un orifice calibré et profilé 23 ménagé dans une plaque intérieure 24 et un déflecteur intérieur 25. Sur la face intérieure de la plaque 24 il est prévu deux éléments de glissière 26a et 26b visibles sur la figure 2B, dans lesquels est monté à coulissement un bilame 27. Ce bilame est suffisamment mince pour être déformable élastiquement en direction de l'orifice 23 sous l'effet d'une différence de pression existant entre l'extérieur et l'intérieur de la fenêtre, due par exemple à la présence du vent. Ce bilame joue de manière connue le rôle de volet obturateur mobile donnant à la bouche un caractère autoréglable c'est-à-dire de stabilisation du débit d'entrée d'air quelle que soit la différence de pression entre l'intérieur et l'extérieur.

Le bilame 27 est équipé d'un film 28 résistant électriquement sur l'une de ses faces, relié (fils 29) à un circuit d'alimentation comportant, comme dans la figure 1, un triac et un détecteur du taux d'humidité.

La position 27a du bilame représentée en trait plein sur la figure 2A symbolise la position de repos correspondant à des conditions ambiantes dans lesquelles il n'y a pas de vent, un taux d'humidité intérieur relativement bas conduisant à un débit d'admission d'air moyen. La position 27b du bilame représentée en trait mixte est le résultat de l'existence de vent sur la façade de l'immeuble ou d'air froid. Ce débit d'admission est alors réduit au minimum, le taux d'humidité ambiant restant faible. Enfin la position 27c du bilame est celle qu'il prend en présence d'un taux d'humidité interne trop élevé qui a engendré un chauffage écartant le bilame de l'orifice 23 et permettant l'admission d'un débit d'air plus important. On rappellera que la figure 2A est une coupe schématique transversale de la bouche d'admission selon l'invention et que les positions indiquées sont celles prises par la partie centrale du bilame qui est maintenue de manière coulissante par ses deux extrémités dans les glissières 26a et 26b. On notera qu'en ce qui concerne également les bouches d'admission d'air il peut être intéressant de prévoir une commande d'ouverture forcée pour privilégier le renouvellement d'air au travers d'une pièce de séjour qui serait polluée par la fumée de cigarette.

On a vu, en regard de ce qui précède que l'on peut par le dispositif selon l'invention asservir l'extraction et l'admission d'air à la température, au taux d'humidité et prendre également en compte les conditions atmosphériques extérieures au local à ventiler. L'invention

13

permet, en plus de ces avantages, de réguler la circulation d'air dans le local.

En effet, une commande du débit d'air entrant dans un
appartement implique une commande corrélative du débit
d'air extrait, et inversement, pour que la ventilation
soit optimisée.

Les dispositions de l'invention sont adaptées à la
réalisation de cet asservissement en boucle entre une
bouche d'extraction, par exemple celle d'une cuisine et
les bouches d'admission qui sont réglementairement
disposées dans les chambres ou les pièces de séjour.
La figure 3 illustre par un schéma la réalisation de
ce montage.

Sur cette figure la bouche d'admission est notée 30 et
comporte le détecteur d'humidité 31, la résistance
additionnelle 32 du bilame (film chauffant) en série
aux bornes du secondaire du transformateur 12 avec un
triac 33 sur la gâchette 33a duquel agit le détecteur
d'humidité 31. La bouche d'extraction est notée 40 et
comporte le détecteur d'humidité 41, la résistance
additionnelle 42 du bilame (film chauffant) en série
aux bornes du secondaire du transformateur 12 avec un
triac 43 sur la gâchette 43a duquel agit le détecteur
d'humidité 41. Egalement en série sur le circuit
détecteur triac de chaque bouche on trouve le primaire
d'un transformateur élévateur de tension 34, 44 dont
la tension délivrée par le secondaire est appliquée pour
le transformateur 34, à la gâchette 43a et pour le
transformateur 44, à la gâchette 33a. La liaison entre
le secondaire du transformateur 34 et la gâchette 43a
peut être interrompue par un commutateur 15 manuel
(inverseur) qui peut relier dans son autre position
ladite gâchette à une source de tension adéquate

14

(provenant d'un diviseur 45). Dans la première position de l'inverseur 15 la commande de chaque bouche 30, 40 est asservie au fonctionnement de l'autre. Dans la seconde position de l'inverseur 15 (gâchette 43a reliée au diviseur 45) la commande de la bouche d'extraction 40 est forcée et la commande la bouche d'admission 30 est asservie au fonctionnement de la bouche d'extraction 40. Il n'est pas représenté sur la figure un commutateur qui permettrait de forcer l'ouverture de la bouche d'admission d'air 30, mais ce n'est pas sortir du cadre de la présente invention que de le prévoir pour, par exemple, privilégier la ventilation d'une salle de séjour où l'on fume. Dans ce cas, l'ouverture de la bouche d'extraction 40 sera asservie à celle de la bouche maintenue ouverte de manière forcée.

Par ce montage on voit en effet que le chauffage du bilame d'une bouche 30 ou 40 commandé par la platine 31 ou 41 sensible à l'umidité correspondante est le résultat de la circulation d'un courant de charge au travers du triac 33 ou 43 rendu passant, ce courant engendrant par le transformateur 34 ou 44 une tension de commande de la gâchette 43a ou 33a de l'autre triac 43, 33 le rendant passant dans un rapport correspondant à l'intensité du courant de charge. Le bilame de l'autre bouche est donc chauffé dans une mesure en rapport avec le bilame de la première bouche et les ouvertures des bouches sont alors dans une relation permettant une bonne ventilation.

On voit que ce montage met en oeuvre des éléments extrèmement robustes qui ne nécessitent qu'un très faible entretien. L'exemple donné en figure 3 concerne l'asservissement d'une bouche d'extraction à une seule bouche d'admission. Chacune des bouches d'admission d'un logement peut être reliée à la bouche de la cuisine de la même manière à condition d'utiliser un transformateur 44 ayant autant de secondaires qu'il est prévu d'entrées d'air.

On notera enfin que les transformateurs 34, 44 ne sont qu'un exemple possible de capteurs du passage du courant dans le circuit de charge des triacs susceptibles de commander la gâchette. D'autres composants peuvent être utilisés comme par exemple des thermistances d'autres triacs ou autres permettant de délivrer un courant ou une tension commandée en fonction d'un courant détecté.

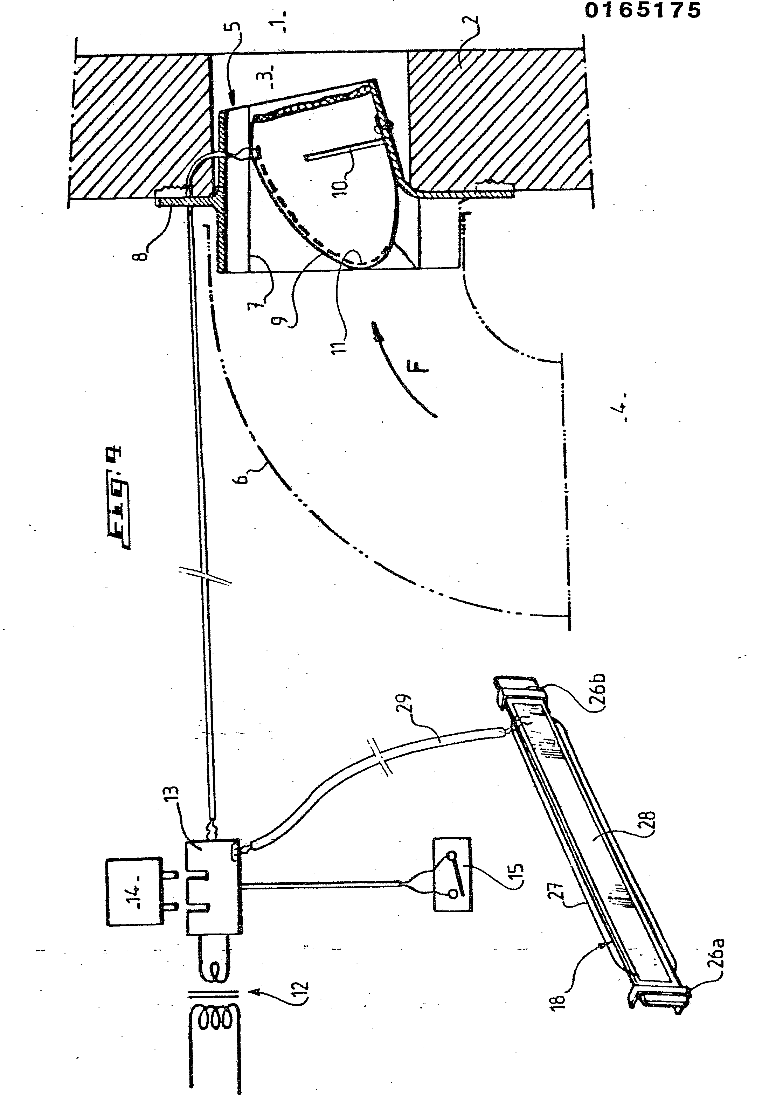

En réponse à la figure 4, on a représenté une modification du mode de réalisation faisant l'objet de la figure 1 et on utilisera donc les mêmes chiffres de référence pour les parties similaires ou identiques.

Selon cette modification de la figure 4, la bouche d'admission représentée par le numéro de référence général 18, lorsqu'elle est située dans une pièce technique, telle que cuisine, salle de bains, ne comporte pas de détecteur d'humidité tandis que l'obturateur réglable, de préférence un bilame, est commandé en parallèle avec celui de la bouche d'extraction 5.

Cette bouche d'admission 18 est de préférence construite sur le même principe que celle décrite dans le brevet principal et représentée aux figures 2A et 2B et on se reportera à ces figures pour comprendre la structure de cette bouche.

Ainsi, selon cette modification, cette bouche d'admission 18 est de type thermoréglable et comporte aussi le bilame 27 représenté à la figure 2A annexée constituant l'obturateur réglable, qui est équipé d'un film 28 résistant électriquement sur l'une de ses faces, et qui est relié par des fils 29 au circuit d'alimentation 13, en étant commandé en parallèle avec celui de la bouche 5.

D'autre part, selon cette modification, l'installation de ventilation est prévue de sorte que les pièces nobles ou pièces principales soient équipées de bouches d'admission hygroréglables qui peuvent être de tout modèle hygroréglable et en particulier de celui précédemment décrit. Ces bouches d'admission des pièces nobles sont autonomes et ne sont plus astreintes à un asservissement lié à l'ouverture d'une bouche d'extraction contrairement à ce qui est décrit aux figures 1 à 3.

D'autre part, de préférence selon cette modification, l'ouverture de la bouche d'admission 18 de la pièce technique est retardée par rapport à celle de la bouche d'extraction 5 de façon à maintenir une dépression dans ladite pièce. Le fonctionnement de l'installation ainsi modifiée est particulièrement simple et ressort clairement également des explications fournies précédemment relativement aux figures 1 à 3.

Ainsi, si le taux d'humidité croît dans la pièce technique, la platine hygrométrique 14 envoie un signal au circuit 13 qui chauffe alors en parallèle les bilames de la bouche d'extraction 5 et de la bouche d'admission 18. Selon une variante de réalisation, l'alimentation du bilame de la bouche d'admission 18 peut être retardée de manière à maintenir une dépression dans le logement.

D'autre part, indépendamment, on peut refermer le commutateur 15 de la commande manuelle et commander ainsi l'échauffement des bilames de la même manière.

Par ailleurs, étant donné que les bouches d'admission des pièces nobles sont autonomes et sont simplement de type hygroréglables, celles-ci ne sont plus astreintes à un asservissement lié à l'ouverture d'une bouche d'extraction et l'air neuf nécessaire à vaincre l'humidité créée dans la pièce technique ne transite donc plus par tout le logement en évitant ainsi de le refroidir.

L'invention permet en outre, comme précédemment décrit, de simplifier la structure de l'installation de ventilation, en éliminant la nécessité d'un asservissement entre bouche d'admission et bouche d'extraction. On élimine ainsi également le risque de panne dû à une défaillance du système d'asservissement.

L'invention offre l'avantage technique supplémentaire de permettre de raccorder un générateur à gaz qui exige un gros débit d'air.

L'invention trouve une explication intéressante dans l'industrie de la ventilation et de la climatisation.

Revendications.

1. Bouche d'extraction ou d'admission d'air ou de gaz pour la ventilation d'un local, comportant un obturateur (9,27) réglable constitué par un bilame sensible à la température et attelé à ladite bouche pour constituer un organe mobile de réglage de la section de passage des gaz à l'intérieur de la bouche (5,23) et dont la position dans ladite section est telle qu'il comporte une face soumise au flux F d'air tendant à devenir de plus en plus convexe lors d'une élévation de température, caractérisée en ce que ledit bilame (9,27) est équipé d'un moyen d'apport de calories additionnel (11,28) commandé par un détecteur (14) du taux d'humidité de l'air.

2. Bouche de ventilation selon la revendication 1 caractérisée en ce que le moyen d'apport de calories susdit est une résistance électrique (11,28) fixée au bilame (9,22) susdit relié à une source (12) de courant au moyen d'un circuit d'alimentation (13) dans lequel le détecteur (14) susdit est un organe de commande de sa fermeture et de son ouverture.

3. Bouche de ventilation selon la revendication 2 caractérisée en ce que ladite résistance (11,28) est intégrée dans une feuille mince collée audit bilame (9,22).

4. Bouche de ventilation selon l'une quelconque des revendications précédentes caractérisée en ce que le détecteur d'humidité (14) est séparé de la bouche (5) elle-même et peut être disposé à distance de celle-ci.

5. Bouche de ventilation selon l'une quelconque des revendications précédentes caractérisée en ce que le détecteur d'humidité (14) est constitué par une platine sensible démontable par rapport à un support (13) de fixation et de connexion électrique de la platine au circuit d'alimentation du moyen (11) d'apport de calories additionnel.

6. Bouche de ventilation selon l'une quelconque des revendications précédentes caractérisée en ce que le circuit électrique d'alimentation du moyen (11) comporte un commutateur (15) manuel disposé sur le circuit pour connecter audit circuit un organe de commande (45) de l'ouverture de ce circuit indépendamment du détecteur d'humidité (14).

7. Bouche d'admission d'air selon l'une quelconque des revendications précédentes caractérisée en ce qu'elle comporte un orifice calibré (23) et profilé ménagé dans sa paroi d'extrémité (24) située dans le local, ledit bilame (27) étant maintenu à distance dudit orifice par deux glissières (26a, 26b) de fixation situées de part et d'autre de l'orifice (23) et recevant à coulissement les extrémités dudit bilame (27).

8. Bouche d'extraction d'air selon l'une quelconque des revendications 1 à 6, caractérisée en ce que ledit bilame (9) est recourbé et est fixé par l'un de ses bords à la paroi d'un tube (7) de montage de ladite bouche (5) dans un conduit de ventilation (3) de manière à exposer la surface externe de sa courbure au flux (F) d'air.

9. Bouche selon la revendication 3, caractérisée en ce que ladite feuille (11,28) est collée sur la face du bilame (9,27) non exposée au flux d'air.

10. Installation de ventilation comportant au moins une bouche d'admission (30) et au moins une bouche d'extraction (40) selon l'une quelconque des revendications 2 à 9, caractérisée en ce qu'elle comporte un capteur (34, 44) du courant traversant la résistance de chauffage (32, 42) de chaque bilame connecté à un organe (43a, 33a) de commande de l'ouverture et de la fermeture du circuit d'alimentation de la résistance (42, 32) de chauffage de l'autre bilame, agissant sur ledit circuit indépendamment de l'état du détecteur (41, 31) d'humidité qui lui est associé.

11. Installation de ventilation comportant au moins une bouche d'admission et/ou d'extraction, telle que définie selon l'une quelconque des revendications 1 à 9, caractérisée en ce que ladite bouche d'admission (18), lorsqu'elle est située dans une pièce technique (4), telle que cuisine, salle de bains, ne comporte pas de détecteur d'humidité tandis que l'obturateur réglable (27), de préférence un bilame, est commandé en parallèle avec celui de la bouche d'extraction (5).

12. Installation de ventilation selon la revendication 11, caractérisée en ce que l'ouverture de l'entrée d'air de la bouche d'admission (18) est retardée par rapport à celle de la bouche d'extraction (5) de manière à maintenir une dépression dans ladite pièce technique (4).

13. Installation de ventilation selon la revendication 11, ou 12, caractérisée en ce que les pièces nobles sont équipées de bouche d'admission de type hygroréglable.

14. Installation de ventilation selon la revendication 13, caractérisée en ce que les bouches d'admission des pièces nobles sont autonomes et ne sont pas asservies à l'ouverture d'une bouche d'extraction.

15. Installation de ventilation selon l'une des revendications 11 à 14, caractérisée en ce que la bouche d'extraction est équipée d'un détecteur d'humidité (14).

16. Installation de ventilation selon l'une des revendications 11 à 15, caractérisée en ce que la bouche d'extraction est équipée d'un détecteur d'humidité (14) et d'une commande manuelle (15).

FIG.1

FIG.2A

FIG.2B

FIG.3

Fig. 9

0165175